(19) 

Europäisches
Patentamt
European
Patent Office
Office européen
des brevets

(11) **EP 4 528 847 A1**

(12) **EUROPEAN PATENT APPLICATION**
published in accordance with Art. 153(4) EPC

(43) Date of publication:
**26.03.2025 Bulletin 2025/13**

(21) Application number: **22966072.5**

(22) Date of filing: **22.11.2022**

(51) International Patent Classification (IPC):
**H01M 4/1395** (2010.01)  **H01M 10/0525** (2010.01)

(52) Cooperative Patent Classification (CPC):
**H01M 4/1395; H01M 10/0525;** Y02E 60/10

(86) International application number:
**PCT/CN2022/133399**

(87) International publication number:
**WO 2024/108371 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central, Central And Western District (HK)**

(72) Inventors:
• **JIN, Haizu
Ningde, Fujian 352100 (CN)**

• **CHEN, Ning
Ningde, Fujian 352100 (CN)**
• **SHI, Dongyang
Ningde, Fujian 352100 (CN)**
• **DENG, Yaqian
Ningde, Fujian 352100 (CN)**
• **LV, Ruijing
Ningde, Fujian 352100 (CN)**
• **WANG, Yuzhen
Ningde, Fujian 352100 (CN)**
• **LI, Baiqing
Ningde, Fujian 352100 (CN)**

(74) Representative: **Kraus & Lederer PartGmbB
Thomas-Wimmer-Ring 15
80539 München (DE)**

(54) **ELECTRODE ASSEMBLY, SECONDARY BATTERY AND ELECTRIC APPARATUS**

(57)    This application provides an electrode assembly, a secondary battery, and an electric apparatus. Considering that a corresponding NP value of the electrode assembly varies with an increase in the number of cycles or storage days, this application considers the design of the NP value corresponding to the electrode assembly with a current capacity retention rate of not less than m. The NP can be designed to take different values for different weight percentages of the silicon-containing active material of a negative electrode plate. For example, 1.035-0.158X is used as a lower limit of the NP value, and 1.206-0.184X is used as an upper limit of the NP value. Since X is used as a subtraction term of the upper and lower limits of the NP value, it is conducive to reducing the total amount of negative electrode material, reducing swelling force of the secondary battery during cycling, and reducing the risk of significant performance degradation of the secondary battery during cycling caused by the excessive swelling force, thus achieving a long service life. Moreover, the reduction in the total amount of negative electrode material saves more space to further increase energy density while ensuring that the driving range is not affected during the life cycle.

Obtain a weight percentage of a silicon-containing active material of a silicon-containing secondary battery 100, and determine an NP value of a reference secondary battery 100 at the first charge or the first discharge and denote it as $Y_{0,0}$, where the reference secondary battery 100 is a secondary battery 100 corresponding to the silicon-containing secondary battery 100 including no silicon-containing active material  — S100

Determine, according to the following formula: $Y_{0,X} = \frac{Y_{0,0}(1 - nA \times e^{bX})}{(1 - nA)}$, an NP value of the silicon-containing secondary battery 100 at the first charge or the first discharge and denote it as $Y_{0,X}$, where in the formula, n refers to that NP of the reference secondary battery 100 after n charge and discharge cycles is equal to NP of the silicon-containing secondary battery 100 after n charge and discharge cycles, A refers to a capacity loss value per charge and discharge cycle of the reference secondary battery 100, and $3.8 \leq b \leq 4.5$  — S200

FIG. 2

**EP 4 528 847 A1**

## Description

### TECHNICAL FIELD

This application relates to the field of battery technologies, and in particular, to an electrode assembly, a secondary battery, and an electric apparatus.

### BACKGROUND

The description herein merely provides background information related to this application and does not necessarily constitute the prior art.

With the pursuit for higher energy density of batteries, graphite negative electrodes can no longer fully meet the demands, and silicon with ultra-high specific capacity is most expected to be a next-generation negative electrode material. In a current preparation method of silicon-containing lithium-ion battery, a certain amount of silicon material is usually doped into graphite.

For the design of silicon-containing lithium-ion battery, to solve the problems such as initial capacity and service life reduction caused by the consumption of active lithium by a negative electrode SEI (solid electrolyte interface, solid electrolyte interface) film, it is common to blindly increase the NP (a ratio of capacity per unit area of a negative electrode plate to capacity per unit area of a positive electrode plate) of a silicon-containing battery and decrease the SoC (State of Charge, state of charge) of a silicon negative electrode, so as to prolong the service life. However, this leads to deterioration in the energy density and increase in the cost, making it impossible to effectively ensure high energy density and long service life.

### SUMMARY

In view of this, it is necessary to provide an electrode assembly, a secondary battery, and an electric apparatus, with an objective to properly design NP of a silicon-containing secondary battery to effectively ensure high energy density and long service life.

According to a first aspect, this application provides an electrode assembly. The electrode assembly includes: a positive electrode plate; and a negative electrode plate including a negative electrode material layer, where the negative electrode material layer includes a silicon-containing active material, and a weight percentage of the silicon-containing active material in the negative electrode material layer is denoted as X; where a ratio of capacity per unit area of the negative electrode plate to capacity per unit area of the positive electrode plate is NP, a current capacity of the electrode assembly is denoted as T1, an initial capacity of the electrode assembly is denoted as T2, and T1/T2 is defined as a current capacity retention rate of the electrode assembly; and NP corresponding to the electrode assembly with the current capacity retention rate of not less than m and X satisfy the following conditions: $1.035-0.158X \leq NP \leq 1.206-0.184X$, $m \geq 99\%$, and $0\% < X \leq 50\%$.

For the foregoing electrode assembly, considering that a corresponding NP value of the electrode assembly varies as the number of cycles or storage days increases, this application considers the design of the NP value corresponding to the electrode assembly with the current capacity retention rate of not less than m. The NP value can be designed based on different weight percentages of the silicon-containing active material of the negative electrode plate. For example, $1.035-0.158X$ is used as a lower limit of the NP value, and $1.206-0.184X$ is used as an upper limit of the NP value. Since X is used as a subtraction term of the upper and lower limits of the NP value, it is conducive to reducing the total amount of negative electrode material and maximizing the reuse of non-decaying lithium intercalation and deintercalation capability of a silicon-doped negative electrode, thus achieving low cost. In addition, the reduction in the total amount of negative electrode material reduces swelling force of a secondary battery during cycling, reducing the risk of significant performance degradation of the secondary battery during cycling caused by the excessive swelling force, thus achieving a long service life. Moreover, the reduction in the total amount of negative electrode material used saves more space to further increase energy density while ensuring that the driving range is not affected during the life cycle.

In some embodiments, NP of the electrode assembly with X>0% at the first charge or the first discharge is denoted as $Y_{0,X}$, $Y_{0,X}$ and X satisfying the following condition:
$$\frac{Y_{0,0}(1-200A \times e^{bX})}{(1-200A)} \leq Y_{0,X} \leq \frac{Y_{0,0}(1-50A \times e^{bX})}{(1-50A)},$$
where in the formula, $Y_{0,0}$ represents an NP value of the electrode assembly with X=0% at the first charge or the first discharge, A represents a capacity loss value per charge and discharge cycle of the electrode assembly with X=0%, and $3.8 \leq b \leq 4.5$. In this way, the NP of the electrode assembly at the first charge or the first discharge is determined according to the foregoing formula, which is conducive to reducing the total amount of negative electrodes, reducing the designed group margin, and reducing the risk of significant performance degradation of the secondary battery during cycling caused by the excessive swelling force, thus achieving an ultra-long service life. In addition, more space is saved to further increase energy density while ensuring that the driving range is not affected during the life cycle.

In some embodiments, $Y_{0,X}$ and $X$ further satisfy the following condition:

$$\frac{Y_{0,0}(1-200A\times e^{bX})}{(1-200A)}\leq Y_{0,X}\leq \frac{Y_{0,0}(1-100A\times e^{bX})}{(1-100A)}$$

. In this way, the upper limit of NP at the first charge or the first discharge is further limited, which prevents an excessively large designed NP value from affecting the energy density of a secondary battery 100 while prolonging the service life of the secondary battery 100, achieving both high energy density and long service life.

In some embodiments, $Y_{0,0}$ satisfies the following condition: $1.03\leq Y_{0,0}\leq 1.2$. In this way, properly limiting the value of $Y_{0,0}$ ensures a reasonable designed NP value of the silicon-containing electrode assembly, effectively ensuring high energy density and long service life.

In some embodiments, $Y_{0,0}$ further satisfies the following condition: $1.05\leq Y_{0,0}\leq 1.15$. In this way, further optimizing the value of $Y_{0,0}$ makes the designed NP value of the silicon-containing electrode assembly more reasonable, helping to further ensure high energy density and long service life.

In some embodiments, A satisfies the following condition: $0.00008\leq A\leq 0.00013$. In this way, properly limiting the value of A also ensures the reasonable designed NP value of the silicon-containing electrode assembly, effectively ensuring high energy density and long service life.

In some embodiments, A further satisfies the following condition: $0.00009\leq A\leq 0.00012$. In this way, further optimizing the value of A makes the designed NP value of the silicon-containing electrode assembly more reasonable, helping to further ensure high energy density and long service life.

In some embodiments, b further satisfies the following condition: $4.0\leq b\leq 4.3$. In this way, further limiting a value range of b makes the designed $Y_{0,X}$ further limited, so that the prepared secondary battery can effectively ensure high energy density and long service life.

In some embodiments, when the weight percentage X of the silicon-containing active material is 3%-50%, the NP value of the electrode assembly is 1.0-1.19. Such design provides a range relationship between NP and X, which facilitates the design of the NP value for different silicon amounts. This can not only ensure high energy density and long service life of the secondary battery, but also facilitate setting of the NP value.

In some embodiments, when the weight percentage X of the silicon-containing active material 10%-25%, the NP value of the electrode assembly is 1.0-1.18. In this way, further limiting value ranges of the percentage of silicon and NP makes the value of NP more accurate.

In some embodiments, the capacity per unit area of the negative electrode plate is denoted as P1, the capacity per unit area of the positive electrode plate is denoted as P2, and P1 and P2 respectively satisfy the following conditions: $2.3 \text{ mAh/cm}^2\leq P1\leq 8.6 \text{ mAh/cm}^2$; and $1.5 \text{ mAh/cm}^2\leq P2\leq 6.8 \text{ mAh/cm}^2$. In this way, under a condition that the inequation relationship between NP and X is satisfied, the capacities per unit area of the positive and negative electrode plates are limited, facilitating the actual design of the positive and negative electrode plates.

In some embodiments, a coating weight per unit area of the negative electrode plate is within a range of 3.9 $\text{mg/cm}^2$ to 16 $\text{mg/cm}^2$. In this way, limiting the value range of the coating weight per unit area of the negative electrode plate provides guidance on preparation of the negative electrode plate.

In some embodiments, the coating weight per unit area of the negative electrode plate is within a range of 3.9 $\text{mg/cm}^2$ to 13 $\text{mg/cm}^2$.

In some embodiments, a coating weight per unit area of the positive electrode plate is within a range of 6.5 $\text{mg/cm}^2$ to 29 $\text{mg/cm}^2$. In this way, limiting the value range of the coating weight per unit area of the positive electrode plate provides guidance on preparation of the positive electrode plate.

In some embodiments, the coating weight per unit area of the positive electrode plate is within a range of 9 $\text{mg/cm}^2$ to 21 $\text{mg/cm}^2$.

In some embodiments, the silicon-containing active material includes at least one of Si and $SiO_z$ (0<z<2). In this way, properly designing composition of the silicon-containing active material helps to obtain a silicon-containing electrode assembly that meets the requirements.

In some embodiments, the positive electrode plate includes a positive electrode active material, the positive electrode active material being configured as an active substance allowing for deintercalation and intercalation of lithium ions.

In some embodiments, the positive electrode active material includes one or more of lithium cobalt oxide, lithium nickel oxide, lithium manganese oxide, lithium nickel manganese oxide, lithium nickel cobalt manganese oxide, and lithium nickel cobalt aluminum oxide; and a compound obtained from transition metal or non-transition metal.

In some embodiments, the positive electrode active material includes a lithium-containing transition metal composite oxide, where the transition metal is at least one selected from nickel, cobalt, manganese, and aluminum. In this way, properly designing composition of a positive electrode material layer helps to obtain a silicon-containing electrode assembly that meets the requirements.

According to a second aspect, this application provides a secondary battery including: a housing; the electrode assembly according to any one of the foregoing embodiments accommodated in the housing; and an electrolyte filled in the housing.

According to a third aspect, this application provides an electric apparatus including the foregoing secondary battery.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

## BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all accompanying drawings, like reference signs denote like components. In the accompanying drawings:

FIG. 1 is a schematic structural exploded view of a secondary battery according to some embodiments of this application;
FIG. 2 is a first schematic flowchart of a design method of NP according to some embodiments of this application; and
FIG. 3 is a second schematic flowchart of a design method of NP according to some embodiments of this application.

100. secondary battery; 10. end cover; 20. electrode assembly; 30. electrode terminal; and 40. housing.

## DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

The application of lithium-ion batteries in new energy vehicles is becoming increasingly common, and the pursuit for high energy density, ultra-long service life, low cost, and the like remains a constant trend in the end market. However, how high energy density, ultra-long service life, and low cost are ensured is a challenge in the industry. With the pursuit for higher energy density of batteries, graphite negative electrodes with a specific capacity of 372 mAh/g can no longer fully meet the demands, and silicon with ultra-high specific capacity is most expected to be a next-generation negative electrode material.

The applicant has noted that a silicon negative electrode has a high capacity loss at the first charge or the first discharge due to its low first-cycle coulombic efficiency. In addition, during normal use (cycling and storage) of a lithium-ion battery, an SEI film is decomposed, reformed, and thickened, which also consumes a certain amount of active lithium, resulting in that the secondary battery has a higher capacity fade speed than a graphite system. In view of this, to ensure long service life of a silicon-containing lithium-ion battery, a certain amount of silicon material is usually doped into graphite.

For the design of the silicon-containing lithium-ion battery, to solve the problems such as initial capacity and service life reduction caused by the consumption of active lithium by a negative electrode SEI (solid electrolyte interface, solid electrolyte interface) film, it is common to blindly increase the NP (a ratio of capacity per unit area of a negative electrode plate to capacity per unit area of a positive electrode plate) of a silicon-containing battery and decrease the SoC (State of Charge, state of charge) of a silicon negative electrode, so as to prolong the service life. However, this leads to deterioration in the energy density and increase in the cost, making it impossible to effectively ensure high energy density and long service life.

In view of this, to solve a problem that high energy density and long service life cannot be effectively ensured due to reduced energy density caused by blindly increasing the NP for longer cycle life of the silicon-containing lithium-ion battery, the applicant has designed an electrode assembly after in-depth research. A relationship between NP and a weight percentage X of a silicon-containing active material of an electrode assembly with a current capacity retention rate of not less than m is so controlled that $1.035-0.158X \leq NP \leq 1.206-0.184X$, $m \geq 99\%$, and $0\% < X \leq 50\%$.

For the foregoing electrode assembly, considering that a corresponding NP value of the electrode assembly varies as the number of cycles or storage days increases, this application considers the design of the NP value corresponding to the electrode assembly with the current capacity retention rate of not less than m. The NP value can be designed based on different weight percentages of the silicon-containing active material of a negative electrode plate. For example, $1.035-0.158X$ is used as a lower limit of the NP value, and $1.206-0.184X$ is used as an upper limit of the NP value. Since X is used as a subtraction term of the upper and lower limits of the NP value, it is conducive to reducing the total amount of negative electrode material and maximizing the reuse of non-decaying lithium intercalation and deintercalation capability of a silicon-doped negative electrode, thus achieving low cost. In addition, the reduction in the total amount of negative electrode material reduces swelling force of a secondary battery during cycling, reducing the risk of significant performance degradation of the secondary battery during cycling caused by the excessive swelling force, thus achieving a long service life.

In addition, compared with the designed NP of a conventional silicon-containing secondary battery, the designed NP value is purposefully reduced according to different silicon amounts in this application, reducing the total amount of negative electrodes, and saving more space to further increase energy density while ensuring that the driving range is not affected during the life cycle.

It should be noted that NP refers to a ratio of capacity per unit area of a negative electrode plate to capacity per unit area of a positive electrode plate, which is calculated using the following formula: $NP=\dfrac{CW_A*Cap_A*Loading_A}{CW_C*Cap_C*Loading_C}$, where CW represents weight per unit area of a coating material in grams per square centimeter (g/cm$^2$), Cap represents gram capacity of an active material in milliampere hours per gram (mAh/g), and Loading represents percentage of the active material, with respective subscripts A for negative electrode, and subscripts C for positive electrode.

Therefore, if the NP value of the electrode assembly is determined, the weights per unit area of the coating materials on the positive and negative electrode plates can be deduced reversely using the foregoing formula. Certainly, during right confirmation at the later stage, the foregoing formula can be used for reverse deduction to obtain an NP value of an infringing product. For example, an electrode assembly of a competitive product is disassembled, positive and negative electrode plates of the same area are respectively assembled with lithium sheets to form button cells, and the capacity performance of the positive and negative electrodes is recorded, and a ratio of the capacity of the negative electrode to the capacity of the positive electrode is the NP value obtained through reverse deduction.

The secondary battery disclosed in the embodiments of this application may be used in, but is not limited to, electric apparatuses such as vehicles, ships, or aircrafts. The secondary battery disclosed in this application may be used to constitute a power supply system of that electric apparatus.

In the power supply system, the secondary battery may be provided in plurality, and the plurality of secondary batteries may be connected in series, parallel, or series-parallel, where being connected in series-parallel means a combination of series and parallel connections of the plurality of secondary batteries. The plurality of secondary batteries may be directly connected in series, parallel or series-parallel, and then an entirety of the plurality of secondary batteries is accommodated in a box; or certainly, the battery may be formed by a plurality of secondary batteries being connected in series, parallel or series-parallel first to form a battery module and then a plurality of battery modules being connected in series, parallel or series-parallel to form an entirety which is accommodated in the box. The battery may further include other structures. For example, the battery may further include a busbar configured to implement electrical connection between the plurality of secondary batteries. The secondary battery may be cylindrical, flat, cuboid, or of other shapes.

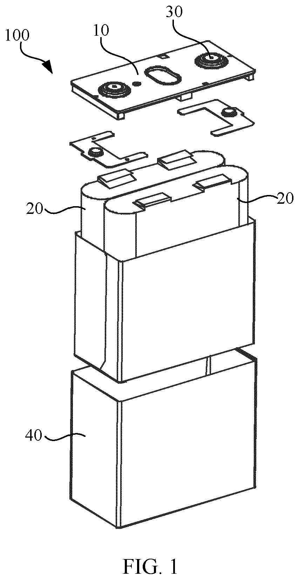

Referring to FIG. 1, FIG. 1 is a schematic structural exploded view of a secondary battery 100 according to some embodiments of this application. The secondary battery 100 is the smallest unit constituting the battery. As shown in FIG. 1, the secondary battery 100 includes an end cover 10, a housing 40, an electrode assembly 20, and other functional components.

The end cover 10 refers to a component that covers an opening of the housing 40 to isolate an internal environment of the secondary battery 100 from an external environment thereof. Without limitation, a shape of the end cover 10 may fit with that of the housing 40, such that the end cover 10 can match the housing 40. Optionally, the end cover 10 may be made of materials with certain hardness and strength (for example, aluminum alloy), so that the end cover 10 is less likely to deform when subjected to extrusion and collision, allowing the secondary battery 100 to have a higher structural strength and enhanced safety performance. The end cover 10 may be provided with functional components such as an electrode terminal 30. The electrode terminal 30 may be configured to be electrically connected to the electrode assembly 20 for outputting or inputting electrical energy of the secondary battery 100. In some embodiments, the end cover 10 may be further provided with a pressure relief mechanism configured to relieve internal pressure when the internal pressure or temperature in the secondary battery 100 reaches a threshold. The end cover 10 may also be made of various materials, such as copper, iron, aluminum, stainless steel, aluminum alloy, and plastic. This is not particularly limited in the embodiments of this application. In some embodiments, an insulator may also be disposed on an inner side of the end cover 10. The insulator may be configured to isolate an electrically connected component in the housing 40 from the end cover 10 to reduce the risk of short circuit. For example, the insulator may be made of plastic, rubber, or the like.

The housing 40 is an assembly configured to form an internal environment of the secondary battery 100 together with the end cover 10, where the formed internal environment may be configured to accommodate the electrode assembly 20, an electrolyte, and other components. The housing 40 and the end cover 10 may be separate components, an opening may be formed in the housing 40, and the end cover 10 covers the opening to form the internal environment of the secondary battery 100. Without limitation, the end cover 10 and the housing 40 may alternatively be integrated. Specifically, the end cover 10 and the housing 40 may form a shared connection surface before other components are placed inside the housing, and then the end cover 10 covers the housing 40 when inside of the housing 40 needs to be enclosed. The housing 40 may be of various shapes and sizes, such as a cuboid shape, a cylindrical shape, and a hexagonal prism shape. Specifically, a shape of the housing 40 may be determined according to a specific shape and size of the electrode assembly 20. The housing 40 may also be made of various materials, such as copper, iron, aluminum, stainless steel, aluminum alloy, and plastic. This is not particularly limited in the embodiments of this application.

The electrode assembly 20 is a component in which electrochemical reactions take place in the secondary battery 100. The housing 40 may include one or more electrode assemblies 20. The electrode assembly 20 is mainly formed by winding or stacking a positive electrode plate and a negative electrode plate, and a separator is typically disposed between the positive electrode plate and the negative electrode plate. Parts of the positive electrode plate and the negative electrode plate that have active substances constitute a body portion of the electrode assembly 20, while parts of the positive electrode plate and the negative electrode plate that have no active substance separately constitute a tab. A positive electrode tab and a negative electrode tab may both be located at one end of the body portion or be located at both ends of the body portion respectively. During charge and discharge of the battery, a positive electrode active substance and a negative electrode active substance react with an electrolyte, and the tabs are connected to the electrode terminal 30 to form a current loop.

According to some embodiments of this application, this application provides an electrode assembly 20. The electrode assembly 20 includes a positive electrode plate and a negative electrode plate. The negative electrode plate includes a negative electrode material layer, where the negative electrode material layer includes a silicon-containing active material, and a weight percentage of the silicon-containing active material in the negative electrode material layer is denoted as X. NP is a ratio of capacity per unit area of the negative electrode plate to capacity per unit area of the positive electrode plate. NP corresponding to the electrode assembly with a current capacity retention rate of not less than m and X satisfy the following conditions: $1.035\text{-}0.158X \leq NP \leq 1.206\text{-}0.184X$, $m \geq 99\%$, and $0\% < X \leq 50\%$.

The positive electrode plate refers to a structure with a positive electrode material layer applied on a current collector. The positive electrode material layer includes a positive electrode active material, a conductive agent, and a binder mixed at a specified ratio. The positive electrode active material refers to a substance containing lithium or lithium iron phosphate. For example, the active material may be expressed by a structural general formula $Li_a(Ni_cCo_dMn_e)O_2$, where $0.9 \leq q \leq 1.2$, $0.2 < c < 1$, $0 < d < 1$, and $a+c+d=1$. The conductive agent refers to a substance capable of increasing conductive contact between active materials and improving the electronic conductivity, for example, conductive graphite, conductive carbon black, conductive carbon fiber, or graphene.

The binder is a polymer compound that adheres an active material to a current collector. For example, the binder may be one of a group formed by polyvinylidene fluoride, polyacrylic acid, polymethacrylic acid, polymethyl acrylate, polyethylene acrylate, pure acrylic emulsion, polyacrylic acid-styrene copolymer, polyvinylpyrrolidone, styrene-butadiene rubber, epoxy resin, neopentyl glycol diacrylate, sodium polyacrylate series, polytetrafluoroethylene, polyimide, polyamides, polyester, cellulose derivative, and polysulfones, or one of a group formed by more than two thereof.

The negative electrode material layer refers to a structure of an active substance applied on a current collector, including a graphite active material, a silicon-containing active material, a conductive agent, and a binder mixed at a specified ratio. The silicon-containing active material is mixed into graphite in a specified proportion. In addition, the negative electrode material layer may further include a carbon material in addition to the silicon-containing active material, and the carbon material may include at least one of natural graphite, artificial graphite, mesocarbon microbeads (MCMB for short), hard carbon, and soft carbon.

NP corresponding to the electrode assembly 20 with the current capacity retention rate of not less than m should be understood as follows: as the number of charge and discharge cycles or the number of the storage days increases, active lithium is consumed due to side reactions, and a local crystal structure of a positive electrode material is changed, resulting in capacity loss, whereas the electrochemical activity of silicon or graphite in a negative electrode material layer is substantially unchanged. Therefore, at the later stage of the charge and discharge cycle, the lithium storage capacity of a negative electrode is excessive and NP tends to increase. In view of this, this application considers controlling the current capacity retention rate of the electrode assembly 20 to be not less than m. For example, the current capacity retention rate of the electrode assembly 20 is not less than 99%, or the electrode assembly 20 is in a first charge or first discharge state (which can also be understood as a newly delivered electrode assembly 20), or the electrode assembly 20 has not been subjected to formation.

A test method of a current capacity of the electrode assembly 20 may be as follows: A secondary battery 100 containing the electrode assembly 20 is charged at 0.5C under a specified condition (for example, at 25°C) to a full-charge voltage. Then, the secondary battery 100 is constant-voltage charged at the full-charge voltage until a current is less than or equal to 0.05C, left standing for 30 min, and then discharged at 1C to a full-discharge voltage. A capacity value at the end of discharge is recorded as the current capacity of the electrode assembly 20. The initial capacity of the electrode assembly 20 can be obtained in various ways. For example, a new secondary battery 100 is manufactured using the electrode assembly 20 with no electrolyte injected, then the above charging and discharging steps are performed on the new secondary battery 100, and a discharge capacity value is recorded as the initial capacity; or an initial capacity or a rated capacity recorded in factory information of the secondary battery 100 can be directly used as the initial capacity of the electrode assembly 20. Certainly, the initial capacity can alternatively be obtained using other test methods, as long as the initial capacity of the electrode assembly 100 can be actually reflected.

According to the weight percentage X of the silicon-containing active material, NP is controlled to be 1.035-0.158X to 1.206-0.184X. For example, when X is 15%, NP may be 1.01-1.18; and when X is 25%, NP may be 1.00-1.15. Specifically, in some embodiments, when X is 15%, NP may be 1.02-1.10; and when X is 25%, NP may be 1.01-1.07. X may be any one value within a range of 0% to 25%.

Since X is used as a subtraction term of the upper and lower limits of the NP value, it is conducive to reducing the total amount of negative electrode material and maximizing the reuse of non-decaying lithium intercalation and deintercalation capability of a silicon-doped negative electrode, thus achieving low cost. In addition, the reduction in the total amount of the negative electrode material reduces swelling force of a secondary battery 100 during cycling, reducing the risk of significant performance degradation of the secondary battery 100 during cycling caused by the excessive swelling force, thus achieving a long service life.

According to some embodiments of this application, NP of the electrode assembly 20 with X>0% at the first charge or the first discharge is denoted as $Y_{0,X}$, $Y_{0,X}$ and X satisfying the following condition:

$$\frac{Y_{0,0}(1-200A \times e^{bX})}{(1-200A)} \leq Y_{0,X} \leq \frac{Y_{0,0}(1-50A \times e^{bX})}{(1-50A)}$$

, where in the formula, $Y_{0,0}$ represents an NP value of the electrode assembly 20 with X=0% at the first charge or the first discharge, A represents a capacity loss value per charge and discharge cycle of the electrode assembly 20 with X=0%, and 3.8≤b≤4.5.

The electrode assembly 20 with X>0% refers to an electrode assembly 20 in which a negative electrode material layer is definitely doped with a silicon-containing active material; and the electrode assembly 20 with X=0% refers to an electrode assembly 20 in which an active material of a negative electrode material layer includes only graphite, and this electrode assembly 20 can also be directly understood as a pure graphite electrode assembly 20. It should be noted that these two electrode assemblies 20 have the same structure except for different compositions of the negative electrode material layers, for example, a positive electrode plate of the electrode assembly 20 with X>0% is the same as that of the electrode assembly 20 with X=0%.

The first charge of the electrode assembly 20 may be understood as formation of the secondary battery 100, which is intended to make the secondary battery 100 electrochemically active and form a solid electrolyte interface film (SEI film) on the surface of the negative electrode. The first discharge of the electrode assembly 20 refers to a first discharge process of the electrode assembly 20 after formation.

For ease of understanding of the foregoing inequation, the inequation may be simplified to

$$\mathrm{Y}_{0,X} = \frac{Y_{0,0}(1 - nA \times e^{bX})}{(1 - nA)}$$

. Since a relationship between values of $Y_{0,X}$ and n is negatively correlated (that is, n can be eliminated from the numerator and the formula may be transformed into $\mathrm{Y}_{0,X} = Y_{0,0}e^{bX}\left[1 - \frac{(1 - e^{-bX})}{(1 - nA)}\right])$ , the value of n may be 50-200. In addition, since $e^{bX}$ in the formula is always greater than 1, the value in $\frac{(1 - nA \times e^{bX})}{(1 - nA)}$ should be always less than 1. In this way, the NP of the silicon-containing electrode assembly 20 at the first charge or the first discharge calculated using the formula $\mathrm{Y}_{0,X} = \frac{Y_{0,0}(1 - nA \times e^{bX})}{(1 - nA)}$ should be less than NP of the pure graphite electrode assembly 20 at the first charge or the first discharge. To be specific, during design of the NP of the silicon-containing electrode assembly 20 is designed, the designed NP value can be reduced based on the percentage of silicon. This is conducive to reducing the total amount of negative electrodes, reducing the designed group margin, and reducing the risk of significant performance degradation of the secondary battery 100 during cycling caused by excessive swelling force, thus achieving an ultra-long service life. In addition, more space is saved to further increase energy density while ensuring that the driving range is not affected during the life cycle.

The NP of the silicon-containing electrode assembly 20 at the first charge or the first discharge is determined according to the foregoing formula, which is conducive to reducing the total amount of negative electrodes, reducing the designed group margin, and reducing the risk of significant performance degradation of the secondary battery 100 during cycling caused by excessive swelling force, thus achieving an ultra-long service life. In addition, more space is saved to further increase energy density while ensuring that the driving range is not affected during the life cycle.

According to some embodiments of this application, $Y_{0,X}$ and X further satisfy the following condition:

$$\frac{Y_{0,0}(1 - 200A \times e^{bX})}{(1 - 200A)} \leq \mathrm{Y}_{0,X} \leq \frac{Y_{0,0}(1 - 100A \times e^{bX})}{(1 - 100A)}$$

.

Similarly, for ease of understanding, the foregoing inequation may be simplified to $\mathrm{Y}_{0,X} = \frac{Y_{0,0}(1 - nA \times e^{bX})}{(1 - nA)}$ , and the value of n may be 100-200. Thus, it can be seen that limiting an upper limit of the inequation of $Y_{0,X}$ prevents an excessively large designed NP value from affecting the energy density of the secondary battery 100 while prolonging the service life of the secondary battery 100 when an initial NP is designed.

The upper limit of NP at the first charge or the first discharge is further limited, which prevents an excessively large designed NP value from affecting the energy density of a secondary battery 100 while prolonging the service life of the secondary battery 100, achieving both high energy density and long service life.

According to some embodiments of this application, $Y_{0,0}$ satisfies the following condition: $1.03 \leq Y_{0,0} \leq 1.2$.

When the NP of the silicon-containing electrode assembly 20 at the first charge or the first discharge is designed, the value of $Y_{0,0}$ can be controlled to be 1.03-1.2. For example, $Y_{0,0}$ being 1.03 or 1.2 is substituted into the foregoing calculation formula for $Y_{0,X}$ for calculation.

Properly limiting the value of $Y_{0,0}$ ensures the reasonable designed NP value of the silicon-containing electrode assembly 20, effectively ensuring high energy density and long service life.

According to some embodiments of this application, $Y_{0,0}$ further satisfies the following condition: $1.05 \leq Y_{0,0} \leq 1.15$.

Similarly, when the NP of the silicon-containing electrode assembly 20 at the first charge or the first discharge is designed, the value of $Y_{0,0}$ can be controlled to be 1.05-1.15. For example, $Y_{0,0}$ being 1.05 or 1.15 is substituted into the foregoing calculation formula for $Y_{0,X}$ for calculation.

Further optimizing the value of $Y_{0,0}$ makes the designed NP value of the silicon-containing electrode assembly 20 more reasonable, helping to further ensure high energy density and long service life.

According to some embodiments of this application, A satisfies the following condition: $0.00008 \leq A \leq 0.00013$.

A represents a capacity loss value per charge and discharge cycle of the electrode assembly with X=0%. Certainly, A can also be understood as a capacity loss value per charge and discharge cycle of the pure graphite electrode assembly 20. The value of A may be any value within a range of 0.00008 to 0.0001. For example, A may be, but is not limited to, 0.00008, 0.00009, or 0.0001.

Properly limiting the value of A also ensures the reasonable designed NP value of the silicon-containing electrode assembly 20, effectively ensuring high energy density and long service life.

According to some embodiments of this application, A further satisfies the following condition: $0.00009 \leq A \leq 0.0001$.

The value of A may be one value within a range of 0.00009 to 0.0001. For example, A may be, but is not limited to, 0.00009 or 0.0001.

Further optimizing the value of A makes the designed NP value of the silicon-containing electrode assembly 20 more reasonable, helping to further ensure high energy density and long service life.

According to some embodiments of this application, b further satisfies the following condition: $4.0 \leq b \leq 4.3$.

When the value of $Y_{0,X}$ is determined, b can be further limited to be 4.0-4.3, which makes the designed $Y_{0,X}$ further limited, so that the prepared secondary battery 100 can effectively ensure high energy density and long service life.

Further limiting a value range of b makes the designed $Y_{0,X}$ further limited, so that the prepared secondary battery 100 can effectively ensure high energy density and long service life.

According to some embodiments of this application, when the weight percentage X of the silicon-containing active material is 3%-50%, the NP value of the electrode assembly is 1.0-1.19.

Value ranges of NP and X can be further limited under a condition that the inequation relationship between NP and X is satisfied. When the weight percentage X of the silicon-containing active material is 3%-50%, the NP corresponding to the electrode assembly 20 with the current capacity retention rate of not less than m should be one value within the range of 1.0 to 1.19 (including endpoint values). For example, the NP may be, but is not limited to, 1.0, 1.1, 1.15, or 1.19.

Such design provides a range relationship between NP and X, which facilitates the design of the NP value for different silicon amounts. This can not only ensure high energy density and long service life of the secondary battery, but also facilitate setting of the NP value.

According to some embodiments of this application, when the weight percentage X of the silicon-containing active material is 10%-25%, the NP value of the electrode assembly is 1.0-1.18.

When the percentage of silicon is 10%-25%, the value of NP may be, but is not limited to, 1.0, 1.15, or 1.18.

Further limiting value ranges of the percentage of silicon and NP makes the value of NP more accurate.

According to some embodiments of this application, the capacity per unit area of the negative electrode plate is denoted as P1, the capacity per unit area of the positive electrode plate is denoted as P2, and P1 and P2 respectively satisfy the following conditions: 2.3 milliampere hours per square centimeter $(mAh/cm^2) \leq P1 \leq 8.6 \ mAh/cm^2$; and $1.5 \ mAh/cm^2 \leq P2 \leq 6.8 \ mAh/cm^2$.

When the NP is designed, the value of NP is taken for different silicon amounts according to the foregoing inequation: $1.035 - 0.158X \leq NP \leq 1.206 - 0.184X$; and after the value of NP is determined, since the value of NP is also related to the values of the capacities per unit area of the positive and negative electrode plates, the design can be performed by comprehensively considering the respective value ranges of NP, P1, and P2 during actual manufacturing of the positive and negative electrode plates.

The value of P1 may be one value within a range of $2.3 \ mAh/cm^2$ to $8.6 \ mAh/cm^2$. For example, P1 may be, but is not limited to, $2.3 \ mAh/cm^2$, $3 \ mAh/cm^2$, $5 \ mAh/cm^2$, or $8.6 \ mAh/cm^2$. Similarly, the value of P2 may be one value within a range of $1.5 \ mAh/cm^2$ to $6.8 \ mAh/cm^2$. For example, P2 may be, but is not limited to, $1.5 \ mAh/cm^2$, $3 \ mAh/cm^2$, $5 \ mAh/cm^2$, or $6.8 \ mAh/cm^2$.

Under a condition that the inequation relationship between NP and X is satisfied, the capacities per unit area of the positive and negative electrode plates are limited, facilitating the actual design of the positive and negative electrode plates.

According to some embodiments of this application, a coating weight per unit area of the negative electrode plate is within a range of $3.9 \ mg/cm^2$ to $16 \ mg/cm^2$.

The capacity per unit area of the negative electrode plate is a product of a gram capacity of an active substance and a coating weight of the active substance per unit area, where the gram capacity is mainly related to the composition of the active substance, and the coating weight per unit area may be, but is not limited to, $3.9 \ mg/cm^2$, $4 \ mg/cm^2$, $10 \ mg/cm^2$, or $16 \ mg/cm^2$.

In this way, limiting the value range of the coating weight per unit area of the negative electrode plate provides guidance on preparation of the negative electrode plate.

According to some embodiments of this application, the coating weight per unit area of the negative electrode plate is within a range of 3.9 mg/cm$^2$ to 13 mg/cm$^2$.

The coating weight per unit area may further be, but is not limited to, 3.9 mg/cm$^2$, 4 mg/cm$^2$, 10 mg/cm$^2$, or 13 mg/cm$^2$.

According to some embodiments of this application, a coating weight per unit area of the positive electrode plate is within a range of 6.5 mg/cm$^2$ to 29 mg/cm$^2$.

The capacity per unit area of the positive electrode plate is a product of a gram capacity of an active substance and a coating weight of the active substance per unit area, where the gram capacity is mainly related to the composition of the active substance, and the coating weight per unit area may be, but is not limited to, 6.5 mg/cm$^2$, 8 mg/cm$^2$, 10 mg/cm$^2$, or 29 mg/cm$^2$.

In this way, limiting the value range of the coating weight per unit area of the positive electrode plate provides guidance on preparation of the positive electrode plate.

In some embodiments, the coating weight per unit area of the positive electrode plate is within a range of 9 mg/cm$^2$ to 21 mg/cm$^2$.

The coating weight per unit area of the positive electrode plate may further be, but is not limited to, 9 mg/cm$^2$, 12 mg/cm$^2$, 18 mg/cm$^2$, or 21 mg/cm$^2$.

According to some embodiments of this application, the silicon-containing active material includes at least one of Si and SiO$z$ (0<z<2).

In a preparation process, a compound represented by Si and/or SiO$z$ is mixed into graphite in a specified proportion to prepare the negative electrode material layer of the negative electrode plate.

Properly designing composition of the silicon-containing active material helps to obtain the silicon-containing electrode assembly 20 that meets the requirements.

According to some embodiments of this application, the positive electrode plate includes a positive electrode active material, the positive electrode active material being configured as an active substance allowing for deintercalation and intercalation of lithium ions.

There are a variety of materials selectable for the positive electrode active material, for example, lithium-containing transition metal oxide and phosphide such as LiCoO$_2$ and LiFePO$_4$.

According to some embodiments of this application, the positive electrode active material includes one or more of lithium cobalt oxide, lithium nickel oxide, lithium manganese oxide, lithium nickel manganese oxide, lithium nickel cobalt manganese oxide, and lithium nickel cobalt aluminum oxide; and a compound obtained from transition metal or non-transition metal.

A variety of materials can be used as the positive electrode active material of this application, for example, layered lithium-containing oxide, spinel-type lithium-containing oxide, or olivine-type lithium-containing phosphate compound. Certainly, the positive electrode active material of this application is not limited to the foregoing materials, and may also use other conventional well-known materials that can be used as positive electrode active substances for lithium-ion batteries. In addition, one type of the foregoing positive electrode active substances may be used alone, or two or more of types may be used in combination.

According to some embodiments of this application, the positive electrode active material includes a lithium-containing transition metal composite oxide, where the transition metal is at least one selected from nickel, cobalt, manganese, and aluminum.

The transition metal may be one selected from nickel, cobalt, manganese, and aluminum or at least one selected from a group consisting of nickel, cobalt, manganese, and aluminum. For example, the transition metal may be a combination of nickel, cobalt, and manganese.

Properly designing composition of the positive electrode material layer helps to obtain the silicon-containing electrode assembly 20 that meets the requirements.

According to some embodiments of this application, this application provides a secondary battery 100. The secondary battery 100 includes a housing 40, the electrode assembly 20 according to any one of the foregoing solutions, and an electrolyte. The electrode assembly 20 is accommodated in the housing 40. The electrolyte is filled in the housing 40.

The electrolyte refers to a carrier of the secondary battery 100 for lithium ion transport, for example, ethylene carbonate, propylene carbonate, or diethyl carbonate.

The foregoing electrode assembly 20 is used in the foregoing secondary battery 100, which is conducive to reducing the total amount of negative electrode material and maximizing the reuse of non-decaying lithium intercalation and deintercalation capability of a silicon-doped negative electrode, thus achieving low cost. In addition, the reduction in the total amount of the negative electrode material reduces swelling force of the secondary battery 100 during cycling, reducing the risk of significant performance degradation of the secondary battery 100 during cycling caused by the excessive swelling force, thus achieving a long service life.

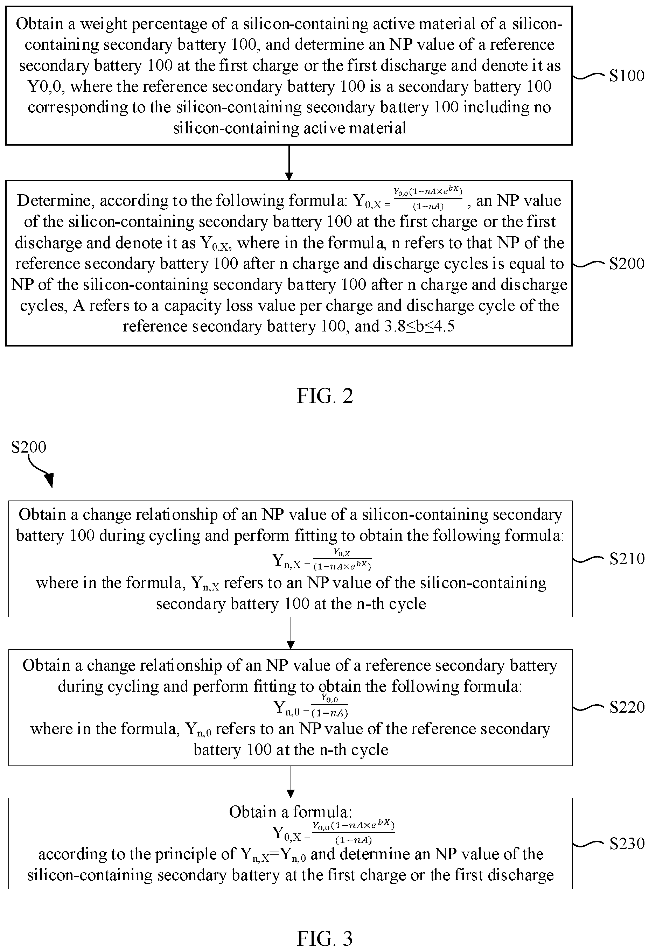

According to some embodiments of this application, referring to FIG. 2, this application provides a design method of NP of silicon-containing secondary battery 100, where NP refers to a ratio of capacity per unit area of a negative electrode plate to capacity per unit area of a positive electrode plate. The design method includes the following steps:

S 100. Obtain a weight percentage of a silicon-containing active material of a silicon-containing secondary battery 100, and determine an NP value of a reference secondary battery 100 at the first charge or the first discharge and denote it as Y0,0, where the reference secondary battery 100 is a secondary battery 100 corresponding to the silicon-containing secondary battery 100 including no silicon-containing active material.

S200. Determine, according to the following formula: $Y_{0,X} = \frac{Y_{0,0}(1 - nA \times e^{bX})}{(1 - nA)}$ , an NP value of the silicon-containing secondary battery 100 at the first charge or the first discharge and denote it as $Y_{0,X}$, where in the formula, n refers to that NP of the reference secondary battery 100 after n charge and discharge cycles is equal to NP of the silicon-containing secondary battery 100 after n charge and discharge cycles, A refers to a capacity loss value per charge and discharge cycle of the reference secondary battery 100, and $3.8 \leq b \leq 4.5$.

In step S100, there are various methods to obtain the weight percentage of the silicon-containing active material, for example, an ICP method (Inductive Coupled Plasma Emission Spectrometer method), a potassium fluosilicate capacity method, an ammonium chloride weight method, and a silicon molybdenum blue photometric method may be used to measure a percentage of silicon in a negative electrode plate.

The reference secondary battery 100 refers to a secondary battery 100 without silicon in a negative electrode plate, which can be directly understood as a pure graphite secondary battery 100. When NP of the reference secondary battery 100 in an initial state (for example, the first charge or the first discharge), a value can be obtained directly based on experience, for example, an NP value of a graphite secondary battery 100 with stable performance is selected, such as 1.03-1.2 or 1.05-1.15.

In step S200, a value of n representing the number of cycles can be obtained based on experience, for example, when a silicon-containing secondary battery 100 is designed, and a silicon-containing active material in this silicon-containing secondary battery 100 is replaced with graphite to obtain a reference secondary battery 100; and the two secondary batteries 100 are subjected to cycle test, and the number of cycles is recorded when NPs of the two secondary batteries are equal. Certainly, the value of n can also be obtained based on experience, for example, n may be one value within a range of 50 cycles to 200 cycles or one value within a range of 100 cycles to 200 cycles.

In addition, in step S200, a value of A may be obtained from cyclic charge and discharge experiments of the reference secondary battery 100 or may be obtained based on experience. For example, A may be one value within a range of 0.00008 to 0.00013 or one value within a range of 0.00009 to 0.00012.

The NP determined using the foregoing design method is conducive to reducing the total amount of negative electrodes, reducing the designed group margin, and reducing the risk of significant performance degradation of the secondary battery 100 during cycling caused by excessive swelling force, thus achieving an ultra-long service life. In addition, more space is saved to further increase energy density while ensuring that the driving range is not affected during the life cycle.

According to some embodiments of this application, referring to FIG. 3, step S200 of determining, according to the following formula, an NP value of the silicon-containing secondary battery 100 at the first charge or the first discharge and denoting it as $Y_{0,X}$ includes the following steps:

S210. Obtain a change relationship of the NP value of the silicon-containing secondary battery 100 during cycling and perform fitting to obtain the following formula: $Y_{n,X} = \frac{Y_{0,X}}{(1 - nA \times e^{bX})}$ , where in the formula, $Y_{n,X}$ refers to an NP value of the silicon-containing secondary battery 100 at the n-th cycle.

S220. Obtain a change relationship of the NP value of the reference secondary battery during cycling and perform fitting to obtain the following formula: $Y_{n,0} = \frac{Y_{0,0}}{(1 - nA)}$ , where in the formula, $Y_{n,0}$ refers to an NP value of the reference secondary battery 100 at the n-th cycle.

S230. Obtain a formula: $Y_{0,X} = \frac{Y_{0,0}(1 - nA \times e^{bX})}{(1 - nA)}$ according to the principle of $Y_{n,X} = Y_{n,0}$ and determine the NP value of the silicon-containing secondary battery at the first charge or the first discharge.

The design approach of NP in this application is to quantify the dynamic change of the NP during cycling based on the failure mechanisms of the positive and negative electrode materials so as to reversely design the NP of the silicon-containing battery based on the NP of the silicon-containing battery at the n-th cycle.

In step S210, silicon-containing secondary batteries 100 with different silicon amounts can be subjected to multiple charge and discharge cycles, NP values after cycles are recorded, and relations of NP, X, and n after different cycles are fitted.

In step S220, the silicon-free secondary battery 100 can be subjected to multiple charge and discharge cycles, NP values after cycles are recorded, and relations of NP and n after different cycles are fitted.

Since a failure mode of the silicon-containing secondary battery 100 refers to that active lithium is consumed in the form of side reactions, the capacity loss is caused by the change of a local crystal structure of a positive electrode material, while silicon or graphite in a negative electrode active material has almost no change in electrochemical activity and always maintains a good capability in deintercalation and intercalation of lithium. Therefore, at the later stage of cycling of the silicon-containing secondary battery 100, a lithium storage capacity of a negative electrode is often excessive and NP is always increasing. In view of this, in step S230, maximizing the use of such characteristic of a silicon-doped negative electrode ensures high energy density and long service life. In this application, with comprehensive consideration of the change of the NP during cycling, the NP of the silicon-containing secondary battery 100 is designed based on the NP value of pure graphite at the n-th cycle.

In this way, using the foregoing design method can reduce the initial NP designed, increase the energy density, reduce the cost, and ensure the cycle life.

According to some embodiments of this application, this application provides a design method of NP of silicon-containing secondary battery 100. The dynamic change of NP during cycling can be represented as:

$$Y_{n,X} = \frac{Y_{0,X}}{(1 - nA \times e^{bX})} \quad (1).$$

Maximizing the use of such characteristic of a silicon-doped negative electrode ensures high energy density, long service life, and low cost. In the present invention, with comprehensive consideration of the change of the NP during cycling, NP of the silicon-doped negative electrode is designed based on an NP value of pure graphite at the n-th cycle (preferably the 200th cycle), with a design criterion as follows:

$$Y_{n,X} = Y_{n,0} \quad (2).$$

The formula (2) is substituted into the formula (1) to find $Y_{0,X} = \frac{Y_{0,0}(1 - nA \times e^{bX})}{(1 - nA)}$.

To make the objectives, technical solutions, and advantages of this application clearer and more concise, this application is illustrated with the following specific examples, but this application is not limited to these examples. The examples described below are merely preferable examples of this application and can be used for describing this application. They should not be construed as limitations on the scope of this application. It should be noted that any modifications, equivalent replacements, and improvements made without departing from the spirit and principle of this application shall fall within the protection scope of this application.

To better illustrate this application, the content of this application is further illustrated below with reference to the examples. The specific examples are described below.

Example 1

Positive electrode plate

A positive electrode active substance which was a ternary material nickel cobalt manganese (NCM811), a conductive agent acetylene black, and a binder polyvinylidene fluoride (PVDF) were well mixed at a mass ratio of 97:2:1. The resulting mixture was added into a solvent NMP to prepare a positive electrode slurry. The positive electrode slurry was uniformly applied on a positive electrode current collector aluminum foil, followed by drying at 85°C, cold pressing, die cutting, and slitting, to prepare a lithium-ion battery positive electrode plate.

Negative electrode plate

A negative electrode active substance graphite, commercial silicon oxide, a conductive agent acetylene black, a thickener sodium carboxymethyl cellulose (CMC), and a binder styrene-butadiene rubber (SBR) were added into a solvent water at a mass ratio of 91.2:4.8:2:1:1 and well mixed to prepare a negative electrode slurry. The negative electrode slurry was uniformly applied on a negative electrode current collector copper foil, followed by drying at 85°C and cold pressing, to prepare a lithium-ion battery negative electrode plate in which a percentage of a silicon-containing active material was 5%.

Separator

A polyethylene microporous film was used as a separator substrate. Inorganic aluminum trioxide powder, polyvinylpyrrolidone, and an acetone solvent were well mixed at a weight ratio of 3: 1.5:5.5 to prepare a slurry. The slurry was applied on one side of the substrate and dried to obtain a separator.

Electrolyte

Lithium hexafluorophosphate was dissolved in a mixed solvent composed of ethylene carbonate, dimethyl carbonate, and ethyl methyl carbonate (a volume ratio of ethylene carbonate, dimethyl carbonate, and ethyl methyl carbonate was 1:2: 1) to obtain a lithium-ion battery electrolyte.

Secondary battery 100

The positive electrode plate, the negative electrode plate, and the separator were wound to obtain an electrode assembly 20. Then, the electrode assembly 20 was subjected to processes such as sealing, electrolyte injection, formation, and degassing to prepare a secondary battery 100. A designed charge NP of the secondary battery 100 was 1.10, and a designed capacity of the secondary battery 100 was 120 Ah.

Example 2

This example was basically the same as Example 1 in structure, except that the percentage of silicon in composition of the negative electrode plate was adjusted to 15%, and that the designed charge NP of the secondary battery 100 was 1.078.

Example 3

This example was basically the same as Example 1 in structure, except that the percentage of silicon in composition of the negative electrode plate was adjusted to 25%, and that the designed charge NP of the secondary battery 100 was 1.058.

Example 4

This example was basically the same as Example 3 in structure, except that the coating weight of the positive electrode plate was kept unchanged but the coating weight of the negative electrode plate was increased, and that the designed charge NP of the secondary battery 100 was 1.21.

Blank comparative example

This example was basically the same as Example 1 in structure, except that the percentage of silicon in composition of the negative electrode plate was adjusted to 0%, and that the designed charge NP of the secondary battery 100 was 1.10.

Comparative Example 1

This example was basically the same as Example 1 in structure, except that the coating weight of the positive electrode plate was kept unchanged but the coating weight of the negative electrode plate was increased, and that the designed charge NP of the secondary battery 100 was 1.21.

Comparative Example 2

This example was basically the same as Example 2 in structure, except that the coating weight of the positive electrode plate was kept unchanged but the coating weight of the negative electrode plate was increased, and that the designed charge NP of the secondary battery 100 was 1.21.

Comparative Example 3

This example was basically the same as Example 3 in structure, except that the coating weight of the positive electrode plate was kept unchanged but the coating weight of the negative electrode plate was increased, and that the designed charge NP of the secondary battery 100 was 1.30.

Calculation was performed according to a lower limit $\frac{Y_{0,0}(1-200A \times e^{bX})}{(1-200A)}$ of $Y_{0,x}$, where A=0.0001, b=4.13, and $Y_{0,0}$ was set according to an NP range of 1.03 to 1.20 of a conventional silicon-free battery. For the calculated range of $Y_{0,x}$, refer to Table 1.

Table 1

| Experiment | Percentage of silicon | Proportion of capacity loss per cycle at 0.5C/1C at 25°C | Initial NP relation | Initial NP range |
|---|---|---|---|---|
| Blank comparative example | 0% | 0.010% | $Y_{0,0}$ | 1.03-1.20 |
| Comparative Example 1 | 5% | 0.013% | $\dfrac{Y_{0,0}(1-200A * e^{b*5\%})}{(1-200A)}$ | 1.025-1.194 |
| Comparative Example 2 | 15% | 0.020% | $\dfrac{Y_{0,0}(1-200A * e^{b*15\%})}{(1-200A)}$ | 1.012-1.179 |
| Comparative Example 3 | 25% | 0.029% | $\dfrac{Y_{0,0}(1-200A * e^{b*25\%})}{(1-200A)}$ | 0.992-1.156 |

The following describes performance tests of the secondary battery.

Tests for the battery capacity and the proportion of the capacity loss per charge and discharge cycle of the secondary battery 100 were performed in the foregoing examples and comparative examples. For specific parameters, refer to Table 2.

Test of capacity loss per charge and discharge cycle

After left standing for 2 h at a constant temperature of 25°C, the secondary battery 100 was charged to 4.2 V at 0.5C under a voltage of 2.8 V to 4.2 V, and then charged at a constant voltage of 4.2 V to a current less than or equal to 0.05C. After left standing for 10 min, the secondary battery 100 was discharged to 2.8 V at 1C and then left standing for 10 min. The secondary battery 100 was subjected to the charge and discharge cycle until the discharge capacity decayed to 80% of the initial discharge capacity. The capacity loss per cycle was a ratio of the 20% capacity decay to the total number of cycles.

Battery capacity test of secondary battery 100

At 25°C, the secondary battery 100 was charged at 0.5C to a full-charge voltage. Then, the secondary battery 100 was constant-voltage charged at the full-charge voltage until a current is less than or equal to 0.05C, left standing for 30 min, and then discharged at 1C to a full-discharge voltage. A capacity value at the end of discharge was recorded.

From comparisons between Example 1 and Comparative Example 1, comparisons between Example 2 and Comparative Example 2, and comparisons between Example 3 and Comparative Example 3 as well as Comparative Example 4, it can be learned that the initial (for example, the first charge or the first discharge) NP designed according to the foregoing formula reduces the designed NP value of the silicon-containing secondary battery 100, and that the battery capacity of the resulting secondary battery 100 is high. In addition, the examples and their respective corresponding comparative examples with high NP designed also maintain the same capacity loss per cycle. That is, with the amount of the material used for the negative electrode plate reduced, more space is saved while ensuring that the driving range is not affected during the life cycle, which can increase the energy density, thereby ensuring high energy density and long service life.

**Table 2**

| Experiment | Material system | Designed NP ratio | Battery capacity (Ah) | Proportion of capacity loss per cycle at 0.5C/1C at 25°C |
|---|---|---|---|---|
| Example 1 | NCM811/graphite+5% silicon | 1.09 | 120.0 | 0.013% |
| Comparative Example 1 | NCM811/graphite+5% silicon | 1.21 | 112.8 | 0.013% |
| Example 2 | NCM811/graphite+15% silicon | 1.078 | 126.4 | 0.020% |
| Comparative Example 2 | NCM811/graphite+15% silicon | 1.21 | 116.1 | 0.020% |
| Example 3 | NCM811/graphite+25% silicon | 1.058 | 133.5 | 0.029% |
| Comparative Example 3 | NCM811/graphite+25% silicon | 1.30 | 115.2 | 0.028% |
| Example 4 | NCM811/graphite+25% silicon | 1.21 | 122.1 | 0.029% |

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An electrode assembly, comprising:

   a positive electrode plate; and
   a negative electrode plate comprising a negative electrode material layer, wherein the negative electrode material layer comprises a silicon-containing active material, and a weight percentage of the silicon-containing active material in the negative electrode material layer is denoted as X; wherein a ratio of capacity per unit area of the negative electrode plate to capacity per unit area of the positive electrode plate is NP, a current capacity of the electrode assembly is denoted as T1, an initial capacity of the electrode assembly is denoted as T2, and T1/T2 is defined as a current capacity retention rate of the electrode assembly; and
   NP corresponding to the electrode assembly with the current capacity retention rate of not less than m and X satisfy the following conditions: $1.035-0.158X \leq NP \leq 1.206-0.184X$, $m \geq 99\%$, and $0\% < X \leq 50\%$.

2. The electrode assembly according to claim 1, wherein NP of the electrode assembly with X>0% at the first charge or the first discharge is denoted as $Y_{0,X}$, $Y_{0,X}$ and X satisfying the following condition:

$$\frac{Y_{0,0}(1-200A \times e^{bX})}{(1-200A)} \leq Y_{0,X} \leq \frac{Y_{0,0}(1-50A \times e^{bX})}{(1-50A)}$$, wherein in the formula, $Y_{0,0}$ represents an NP value of the electrode assembly with X=0% at the first charge or the first discharge, A represents a capacity loss value per charge and discharge cycle of the electrode assembly with X=0%, and $3.8 \leq b \leq 4.5$.

3. The electrode assembly according to claim 2, wherein $Y_{0,X}$ and X further satisfy the following condition:

$$\frac{Y_{0,0}(1-200A \times e^{bX})}{(1-200A)} \leq Y_{0,X} \leq \frac{Y_{0,0}(1-100A \times e^{bX})}{(1-100A)}$$.

4. The electrode assembly according to claim 2 or 3, wherein $Y_{0,0}$ satisfies the following condition: $1.03 \leq Y_{0,0} \leq 1.2$; and optionally, $Y_{0,0}$ further satisfies the following condition: $1.05 \leq Y_{0,0} \leq 1.15$.

5. The electrode assembly according to claim 2 or 3, wherein A satisfies the following condition: $0.00008 \leq A \leq 0.00013$; and

    optionally, A further satisfies the following condition: $0.00009 \leq A \leq 0.00012$.

6. The electrode assembly according to claim 2 or 3, wherein b further satisfies the following condition: $4.0 \leq b \leq 4.3$.

7. The electrode assembly according to any one of claims 1 to 6, wherein when the weight percentage X of the silicon-containing active material is 3%-50%, the NP value of the electrode assembly is 1.0-1.19; and

    optionally, when the weight percentage X of the silicon-containing active material 10%-25%, the NP value of the electrode assembly is 1.0-1.18.

8. The electrode assembly according to any one of claims 1 to 7, wherein the capacity per unit area of the negative electrode plate is denoted as P1, the capacity per unit area of the positive electrode plate is denoted as P2, and P1 and P2 respectively satisfy the following conditions: $2.3 \text{ mAh/cm}^2 \leq P1 \leq 8.6 \text{ mAh/cm}^2$; and $1.5 \text{ mAh/cm}^2 \leq P2 \leq 6.8 \text{ mAh/cm}^2$.

9. The electrode assembly according to any one of claims 1 to 8, wherein a coating weight per unit area of the negative electrode plate is within a range of $3.9 \text{ mg/cm}^2$ to $16 \text{ mg/cm}^2$; and optionally, the coating weight per unit area of the negative electrode plate is within a range of $3.9 \text{ mg/cm}^2$ to $13 \text{ mg/cm}^2$; and/or

    a coating weight per unit area of the positive electrode plate is within a range of $6.5 \text{ mg/cm}^2$ to $29 \text{ mg/cm}^2$; and optionally, the coating weight per unit area of the positive electrode plate is within a range of $9 \text{ mg/cm}^2$ to $21 \text{ mg/cm}^2$.

10. The electrode assembly according to any one of claims 1 to 9, wherein the silicon-containing active material comprises at least one of Si and $SiO_z$ ($0 < z < 2$).

11. The electrode assembly according to any one of claims 1 to 10, wherein the positive electrode plate comprises a positive electrode active material, the positive electrode active material being configured as an active substance allowing for deintercalation and intercalation of lithium ions.

12. The electrode assembly according to claim 11, wherein the positive electrode active material comprises one or more of lithium cobalt oxide, lithium nickel oxide, lithium manganese oxide, lithium nickel manganese oxide, lithium nickel cobalt manganese oxide, and lithium nickel cobalt aluminum oxide; and a compound obtained from transition metal or non-transition metal; and

    optionally, the positive electrode active material comprises a lithium-containing transition metal composite oxide, wherein the transition metal is at least one selected from nickel, cobalt, manganese, and aluminum.

13. A secondary battery, comprising:

    a housing;
    the electrode assembly according to any one of claims 1 to 12 accommodated in the housing; and
    an electrolyte filled in the housing.

14. An electric apparatus, comprising the secondary battery according to claim 13.

FIG. 1

Obtain a weight percentage of a silicon-containing active material of a silicon-containing secondary battery 100, and determine an NP value of a reference secondary battery 100 at the first charge or the first discharge and denote it as Y0,0, where the reference secondary battery 100 is a secondary battery 100 corresponding to the silicon-containing secondary battery 100 including no silicon-containing active material ∼S100

Determine, according to the following formula: $Y_{0,X} = \frac{Y_{0,0}(1-nA \times e^{bX})}{(1-nA)}$, an NP value of the silicon-containing secondary battery 100 at the first charge or the first discharge and denote it as $Y_{0,X}$, where in the formula, n refers to that NP of the reference secondary battery 100 after n charge and discharge cycles is equal to NP of the silicon-containing secondary battery 100 after n charge and discharge cycles, A refers to a capacity loss value per charge and discharge cycle of the reference secondary battery 100, and $3.8 \leq b \leq 4.5$ ∼S200

FIG. 2

S200

Obtain a change relationship of an NP value of a silicon-containing secondary battery 100 during cycling and perform fitting to obtain the following formula:
$$Y_{n,X} = \frac{Y_{0,X}}{(1-nA \times e^{bX})}$$
where in the formula, $Y_{n,X}$ refers to an NP value of the silicon-containing secondary battery 100 at the n-th cycle ∼S210

Obtain a change relationship of an NP value of a reference secondary battery during cycling and perform fitting to obtain the following formula:
$$Y_{n,0} = \frac{Y_{0,0}}{(1-nA)}$$
where in the formula, $Y_{n,0}$ refers to an NP value of the reference secondary battery 100 at the n-th cycle ∼S220

Obtain a formula:
$$Y_{0,X} = \frac{Y_{0,0}(1-nA \times e^{bX})}{(1-nA)}$$
according to the principle of $Y_{n,X}=Y_{n,0}$ and determine an NP value of the silicon-containing secondary battery at the first charge or the first discharge ∼S230

FIG. 3

**EP 4 528 847 A1**

## INTERNATIONAL SEARCH REPORT

International application No.

**PCT/CN2022/133399**

### A. CLASSIFICATION OF SUBJECT MATTER

H01M4/1395(2010.01)i; H01M10/0525(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 锂, 电池, 电极, 负极, 阳极, 硅, 含量, 面积, 容量, lithium, battery, cell, electrode, negative, anode, silicon, content, area, capacity

### C. DOCUMENTS CONSIDERED TO BE RELEVANT

| Category* | Citation of document, with indication, where appropriate, of the relevant passages | Relevant to claim No. |
|---|---|---|
| X | CN 109671999 A (CHINA AUTOMOTIVE BATTERY RESEARCH INSTITUTE CO., LTD.) 23 April 2019 (2019-04-23)<br>description, paragraphs 6-36 | 1-14 |
| X | CN 112563559 A (NINGDE CONTEMPORARY AMPEREX TECHNOLOGY CO., LTD.) 26 March 2021 (2021-03-26)<br>description, paragraphs 3-131 | 1-14 |
| A | CN 115172705 A (JIANGSU ZENERGY BATTERY TECHNOLOGIES CO., LTD.) 11 October 2022 (2022-10-11)<br>entire document | 1-14 |
| A | WO 2019012864 A1 (MURATA MANUFACTURING CO., LTD.) 17 January 2019 (2019-01-17)<br>entire document | 1-14 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 August 2023** | **03 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

# EP 4 528 847 A1

| INTERNATIONAL SEARCH REPORT Information on patent family members | | | | International application No. PCT/CN2022/133399 | | | |
|---|---|---|---|---|---|---|---|
| Patent document cited in search report | | | Publication date (day/month/year) | Patent family member(s) | | | Publication date (day/month/year) |
| CN | 109671999 | A | 23 April 2019 | CN | 109671999 | B | 12 January 2021 |
| CN | 112563559 | A | 26 March 2021 | WO | 2021057428 | A1 | 01 April 2021 |
| | | | | IN | 202217004515 | A | 04 February 2022 |
| | | | | EP | 3955358 | A1 | 16 February 2022 |
| | | | | KR | 20220036961 | A | 23 March 2022 |
| | | | | US | 2022166018 | A1 | 26 May 2022 |
| | | | | JP | 2022534453 | W | 29 July 2022 |
| | | | | CN | 115295791 | A | 04 November 2022 |
| CN | 115172705 | A | 11 October 2022 | | None | | |
| WO | 2019012864 | A1 | 17 January 2019 | JPWO | 2019012864 | A1 | 26 March 2020 |
| | | | | JP | 6927303 | B2 | 25 August 2021 |

Form PCT/ISA/210 (patent family annex) (July 2022)